# EUROPEAN PATENT SPECIFICATION

(11) **EP 2 849 525 B1**
(45) Date of publication and mention of the grant of the patent: **08.03.2017**
(21) Application number: 13804252.8
(22) Date of filing: 06.08.2013
(51) Int. Cl.: H04W 72/12, H04W 52/14

(54) **METHOD AND DEVICE FOR SCHEDULING DOWNLINK RESOURCES**
VERFAHREN UND VORRICHTUNG ZUR ZEITPLANUNG VON DOWNLINK-RESSOURCEN
PROCÉDÉ ET DISPOSITIF POUR PLANIFIER LES RESSOURCES DE LIAISON DESCENDANTE

(30) Priority: 26.10.2012 CN 201210415209
(43) Date of publication of application: 18.03.2015
(73) Proprietor: ZTE Corporation, Shenzhen, Guangdong 518057 (CN)
(72) Inventor: YU, Qingqi, Shenzhen Guangdong 518057 (CN); YAO, Wenjun, Shenzhen Guangdong 518057 (CN); DING, Jiewei, Shenzhen Guangdong 518057 (CN)
(74) Representative: D'Halleweyn, Nele Veerle Trees Gertrudis
(86) International application number: PCT/CN2013/080897
(87) International publication number: WO 2013/185723

(56) References cited:
- EP-A1- 2 293 638
- CN-A- 101 384 056
- CN-A- 101 946 537
- CN-A- 102 547 821
- US-A1- 2011 149 823

## Description

The present invention relates to antenna transceiver system, and in particular, to a method and apparatus for scheduling downlink resources.

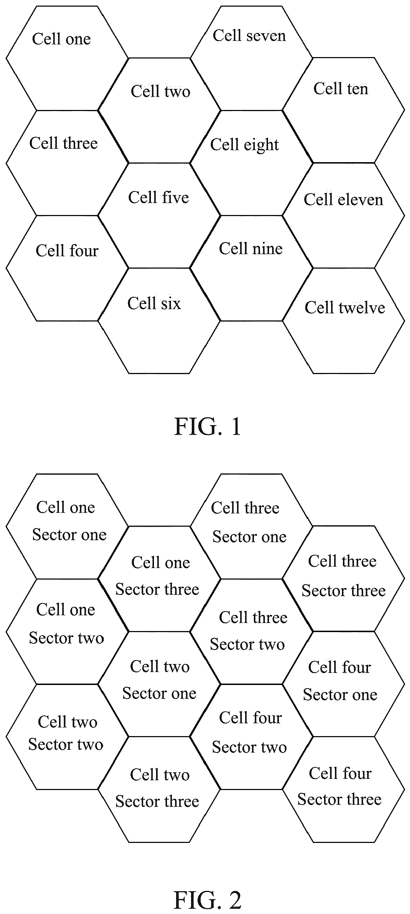

The traditional networking mode of the Universal Mobile Telecommunications System (UMTS) and the Long Term Evolution (LTE) is Sectorized Transmission Sectorized Receive (STSR). As shown in Fig. 1, a logical cell corresponds to a sector, and uses a set of directional antennas to transmit and receive signals. In a high-speed rail scenario or an outdoor scene where the degree of overlapping in coverage of sectors is low, the traditional STSR coverage mode may result in call drop because switching is not in time. At the same time, for coverage of a dense urban area, it may bring serious power pollution problems.

In order to solve the above problem of the network, a networking mode of Omni Transmission Sectorized Receive (OTSR) is proposed, in which a cell is configured with multiple sets of antennas to realize downlink omni transmission and uplink directional sectorized reception, thereby achieving the effect of coverage of a directional station in a manner of omni station. Thus, a user moves among different sectors, and is still in a coverage range of the same logical cell, and switching does not occur. As shown in Fig. 2, a logical cell achieves an effect of coverage using three directional antennas. The same logical cell is configured in a base station system, a baseband signal is divided into three paths of radio frequency signals, which are transmitted via three sets of directional antennas; and three sectors are used to receive the signals directionally, and a merging process is performed on the three paths of signals after the signals are received.

In the UMTS and LTE systems, an OTSR cell may realize a wide area network coverage in a flat area with a low cost, or realize coverage of a complex urban area flexibly, which can reduce a number of cells and simplify network configuration, enhance uplink reception performance and system capacity, and meanwhile also reduce a number of soft handovers for a downlink user.

In the OTSR network configuration, regardless of which sector the User Equipment (UE) is located, transmission of the same signal by all sectors wastes large power and reduce the capacity of the downlink cell. In addition, a lot of ineffective power transmission also results in signal interference and thereby reduces the coverage range of the cell. The downlink code channels are occupied in three sectors in a cell, which reduces the utilization of the code resources.

In order to further solve the problem of low utilization of the downlink power and code resources of the OTSR cell, a method for downlink sub-sector transmission is proposed in the prior art, i.e., resources of various sectors of each OTSR cell are managed, each sector respectively maintains a set of power sources and code resources, and the code resources are reused among various sectors of the OTSR cell. The base station judges a sector there the UE is located, and respectively performs scheduling and allocation and then transmission in the sector where the UE is located. In the method, the selection of the sector where the UE is located is determined according to the information of the sector where the uplink signal is located, and large power is transmitted to the UE in a sector where the signal is weak, which results in low power utilization, and at the same time, the strategy of scheduling the downlink power and code resources of multiple sectors thereof is too simple, which will result in a waste of transmission power and interruption of downlink signals among sectors; and for a sector where the power congestion occurs, no strategy of enhancing power utilization is proposed.

In the above OTSR technical solution, various sectors can reuse the power resources and code resources, but due to the above problems of power utilization and downlink interference, it results in non-ideal commercial performance.

US patent publication US2011/149823 in the name of the Applicant discloses a method for processing downlink signals in different sectors, applied in processing downlink signals in a sectored cell, in order to reduce downlink transmission power and improve network coverage quality.

The object of embodiments of the present invention is to provide a method and apparatus for scheduling downlink resources, which improves downlink power utilization, reduces interference among downlink signals, and enhances the downlink capacity of the system for an OTSR cell.

The above object is achieved by a method according to claim 1 and an apparatus according to claim 6. Further improvements and embodiments are provided in the dependent claims.

A method for scheduling downlink resources according to an embodiment of the present invention comprises:
a base station determining, according to energy of an uplink demodulation signal of the terminal received on each sector, a home sector of the terminal, and allocating, according to the home sector of the terminal, downlink power and a downlink code channel to the terminal on the home sector.

A base station determining, according to energy of an uplink demodulation signal of the terminal received on each sector, a home sector of the terminal comprises:
the base station selecting a sector corresponding to received strongest uplink demodulation signal energy Emax of the terminal as the strongest home sector of the terminal, and judging whether energy E(i) of an uplink demodulation signal of a sector i other than the strongest home sector in the sectors corresponding to the terminal meets E(i) > Emax - Th_E, and if yes, determining the sector i as a home sector of the terminal other than the strongest home sector, wherein, Th_E is a home sector selection energy threshold, and i is a sector number.

Preferably, allocating, according to the home sector of the terminal, downlink power and a downlink code channel to the terminal on the home sector comprises:
when the terminal corresponds to one home sector, the base station allocating required downlink power and downlink code channel to the terminal on the home sector of the terminal.

Preferably, allocating, according to the home sector of the terminal, downlink power and a downlink code channel to the terminal on the home sector comprises:
when the terminal corresponds to multiple home sectors, the base station allocating the same downlink code channel to the terminal on the multiple home sectors corresponding to the terminal, and allocating downlink power to the terminal on each home sector of the terminal respectively.

Allocating downlink power to the terminal on each home sector of the terminal respectively comprises:
the base station allocating downlink power to the terminal on the strongest home sector, and judging whether energy E(i) of the uplink demodulation signal of the terminal received on a home sector of the terminal other than the strongest home sector meets E(i) >= Emax - Th_pl, and if yes, determining to use on the home sector the same downlink power as that on the strongest home sector; and if not, determining that the downlink power on the home sector is less than the downlink power on the strongest home sector, wherein, Th_p1 is a downlink power decrease threshold.

The method further comprises:
when the base station allocates the downlink power to the terminal on each home sector of the terminal, when determining that power congestion occurs in the home sector, judging whether energy E(i) of the uplink demodulation signal of the terminal received on the sector where the power congestion occurs meets E(i) < Emax - Th_p2, and if yes, shutting down the transmission to the terminal on the home sector, wherein, Th_p2 is a downlink power shutdown threshold.

Preferably, when the energy E(i) of the uplink demodulation signal of the terminal received on the home sector of the terminal other than the strongest home sector does not meet E(i) >= Emax - Th_p1, the base station determines that the downlink power of the terminal on the home sector = the downlink power on the strongest home sector * [Th_E-(Emax- E(i))]/ (Th_E-Th_p1).

Preferably, different service types of the terminal correspond to different Th_E, Th_p1 and Th_p2; and
the base station determines the home sector of the terminal according to the service type of the terminal, and allocates downlink power and a downlink code channel to the terminal on the home sector according to the service type of the terminal.

An apparatus for scheduling downlink resources comprises a sector position judgment unit, a resource management unit, and a resource hybrid scheduling unit, wherein,
the sector position judgment unit is configured to determine, according to energy of an uplink demodulation signal of the terminal received on each sector, a home sector of the terminal;
the resource management unit is configured to update, according to a cell parameter, configuration information of multiple sectors and terminal scheduling information, downlink power resource and downlink code channel resource of each sector; and
the resource hybrid scheduling unit is configured to allocate, according to the home sector of the terminal, downlink power and a downlink code channel to the terminal on the home sector.

The sector position judgment unit is configured to select a sector corresponding to received strongest uplink demodulation signal energy Emax of the terminal as the strongest home sector of the terminal, and judge whether energy E(i) of an uplink demodulation signal of a sector i other than the strongest home sector in the sectors corresponding to the terminal meets E(i) > Emax - Th_E, and if yes, determine the sector i as a home sector of the terminal other than the strongest home sector, wherein, Th_E is a home sector selection energy threshold, and i is a sector number.

Preferably, the resource hybrid scheduling unit is configured to allocate required downlink power and downlink code channel to the terminal on the home sector of the terminal when the terminal corresponds to one home sector.

Preferably, the resource hybrid scheduling unit is configured to, when the terminal corresponds to multiple home sectors, allocate the same downlink code channel to the terminal on the multiple home sectors corresponding to the terminal, and allocate downlink power to the terminal on each home sector of the terminal respectively.

The resource hybrid scheduling unit is configured to allocate downlink power to the terminal on the strongest home sector, and judge whether energy E(i) of the uplink demodulation signal of the terminal received on a home sector of the terminal other than the strongest home sector meets E(i) >= Emax - Th_p1, and if yes, determine to use on the home sector the same downlink power as that on the strongest home sector; and if not, determine that the downlink power on the home sector is less than the downlink power on the strongest home sector, wherein, Th_p1 is a downlink power decrease threshold.

The resource hybrid scheduling unit is configured to, when allocating the downlink power to the terminal on each home sector of the terminal, and when determining that power congestion occurs in the home sector, judge whether energy E(i) of the uplink demodulation signal of the terminal received on the sector where the power congestion occurs meets E(i) < Emax - Th_p2, and if yes, shut down the transmission to the terminal on the home sector, wherein, Th_p2 is a downlink power shutdown threshold.

Preferably, the resource hybrid scheduling unit is configured to, when the energy E(i) of the uplink demodulation signal of the terminal received on the home sector of the terminal other than the strongest home sector does not meet E(i) >= Emax - Th_p1, determine that the downlink power of the terminal on the home sector = the downlink power on the strongest home sector * [Th_E-(Emax- E(i))]/ (Th_E-Th_p1).

In conclusion, the embodiments of the present invention achieve an optimized strategy of determining a home sector of a mobile terminal and hybrid scheduling of power and code resources of multiple sectors, which improves utilization of the power resources and code resources, and effectively control interference of downlink co-spreading codes, so that the sub-sector transmission technology of the OTSR really has a commercial capability. In a case of configuration of three sectors for the OTSR, compared to the original OTSR cell performance, in the downlink multi-antenna hybrid scheduling technology according to the embodiments of the present invention, the utilization of the power increases more than 50%, and the utilization of the code resources increases more than 100%.

### Brief Description of Drawings

Fig. 1 is a diagram of an application of a traditional STSR networking;
Fig. 2 is a diagram of an application of a traditional OTSR-3 networking;
Fig. 3 is a structural diagram of an apparatus for scheduling downlink resources according to an embodiment of the present invention;
Fig. 4 is a flowchart of a method for scheduling downlink resources according to an embodiment of the present invention;
Fig. 5 is a diagram of an application scenario of determining a home sector of a terminal according to an embodiment of the present invention;
Fig. 6 is a diagram of selecting a home sector of a terminal according to an embodiment of the present invention; and
Fig. 7 is a diagram of allocating resources of sectors according to an embodiment of the present invention.

### Preferred Embodiments of the Present Invention

The embodiments of the present invention will be described in detail in conjunction with accompanying drawings hereinafter. It should be illustrated that without conflict, the embodiments in the application and the features of the embodiments can be randomly combined with each other.

In the present embodiment, a base station determines a home sector of a terminal according to energy of an uplink demodulation signal of the terminal received on each sector; in the present embodiment, different thresholds are set for different service types of the terminal, thereby effectively improving the interference of the downlink spreading code; different downlink power is transmitted for different home sectors where the same terminal is located, thereby improving the utilization of the downlink power; for a sector where power congestion occurs, downlink power transmission is shut down for some weak paths in the sector, to further improve the utilization of the downlink power; and the same downlink code channel is used for one terminal on different home sectors.

The strategy of determining a home sector of a terminal according to the present embodiment will be described below:
Assume that the terminal is located on a i^{th} sector of N sectors of an OTSR cell, i=0,1,...,N-1, and E(i) is defined as energy of an uplink demodulation signal, Sector(i) is a sector corresponding to E(i), Emax is the strongest uplink demodulation signal energy on the N sectors, SectorMax is defined as a sector corresponding to Emax, and is the strongest home sector of the terminal, and Th_E is defined as a home sector selection energy threshold.

If the energy E(i) of the uplink demodulation signal corresponding to Sector(i) meets E(i) > Emax - Th_E, it is judged that the sector is a home sector of the terminal.

Preferably, a different home sector selection energy threshold Th_E is utilized for a different service type of the terminal. For example, preferably Th_E of a DPA service is 7dB and Th_E of a CS12.2k service is 13dB.

A strategy of allocating power resources and code channel resources of a terminal according to the present embodiment will be described below.

Each sector in the OTSR cell maintains respective downlink power resource separately and reuses downlink code channel resources of the whole cell.
(1) if it is judged that there is one home sector of the terminal, the sector uses the downlink code channel and downlink power required for the terminal;
(2) if it is judged that there are multiple home sectors of the terminal, the same downlink code channel and required downlink power resource are allocated to each sector. A method for allocating downlink power is as follows.

Th_p1 and Th_p2 are defined as a downlink power decrease threshold and a downlink power shutdown threshold for a home sector;
if the energy E(i) of the uplink demodulation signal of a certain home sector Sector(i) meets E(i)>=Emax - Th_p1, the home sector uses the same downlink power as that of SectorMax;
if the energy E(i) of the uplink demodulation signal of a certain home sector Sector(i) meets E(i) < Emax - Th_p1, the downlink power allocated on the home sector is less than that of SectorMax;
if power congestion occurs on a certain home sector Sector(i) and the energy E(i) of the uplink demodulation signal meets E(i) < Emax - Th_p2, the transmission on the sector is shut down.

Preferably, a different downlink power decrease threshold Th_p1 and a different downlink power shutdown threshold Th_p2 are used for a different service type of the terminal. For example, preferably for a DPA service, Th_p1 is 3dB and Th_p2 is 5dB, and for a CS 12.2k service, Th_p1 is 5dB and Th_p2 is 9dB.

An apparatus for scheduling downlink resources according to the present embodiment comprises:
a sector position judgment unit, configured to judge a home sector of a terminal, i.e., the sector position judgment unit judges a coverage of one or more sectors to which the terminal belongs according to energy of a received uplink demodulation signal of the terminal;
a resource management unit, configured to manage downlink resources of each sector in the cell, which comprise downlink code resources and downlink power resources;
a resource hybrid scheduling unit, configured to allocate resources for multiple sectors, perform an allocation process on the downlink resources according to home sectors of the terminal, i.e., for a terminal belonging to one sector, allocating downlink code channels and power from the sector; and for a terminal belonging to multiple sectors, performing hybrid scheduling to allocate the same downlink code resource and required power resource from each sector; and
a downlink signal transmission unit, configured to transmit downlink signals for each sector, i.e., performing downlink transmission according to power and code channel information allocated in each sector in the resource hybrid scheduling unit.

A method for scheduling downlink resources according to the present embodiment comprises the following steps.

In step A, a sector position judgment unit determines a home sector of the terminal according to energy of an uplink demodulation signal of the terminal and service types in accordance with the strategy of selecting a home sector of the terminal;
in step B, during each scheduling, a resource management unit updates downlink power resource and downlink code channel resource of each sector according to a cell parameter, configuration information of multiple sectors and terminal scheduling information;
in step C, a resource hybrid scheduling unit performs hybrid scheduling on the terminal on all home sectors according to home sector information and each sector power information of the terminal in accordance with the strategy of allocating power resources and code channel resources, to decide downlink code channel and downlink power of each terminal on each home sector;
the sector power information is non-Hsdpa power, cell rated power, and power which can be borrowed from other carriers etc.,
in step D, after completing the scheduling, the resource hybrid scheduling unit notifies a downlink signal transmission unit of the downlink power and downlink code channel information of each sector, and the downlink signal transmission unit transmits downlink signals according to the sectors.

The scheduling of downlink resources in a UMTS system according to the present embodiment will be described below in conjunction with accompanying drawings. Those skilled in the art can easily implement the present embodiment, and apply the same idea method to other wireless communication systems, for example, GSM, CDMA, LTE and LTE-Advanced etc.

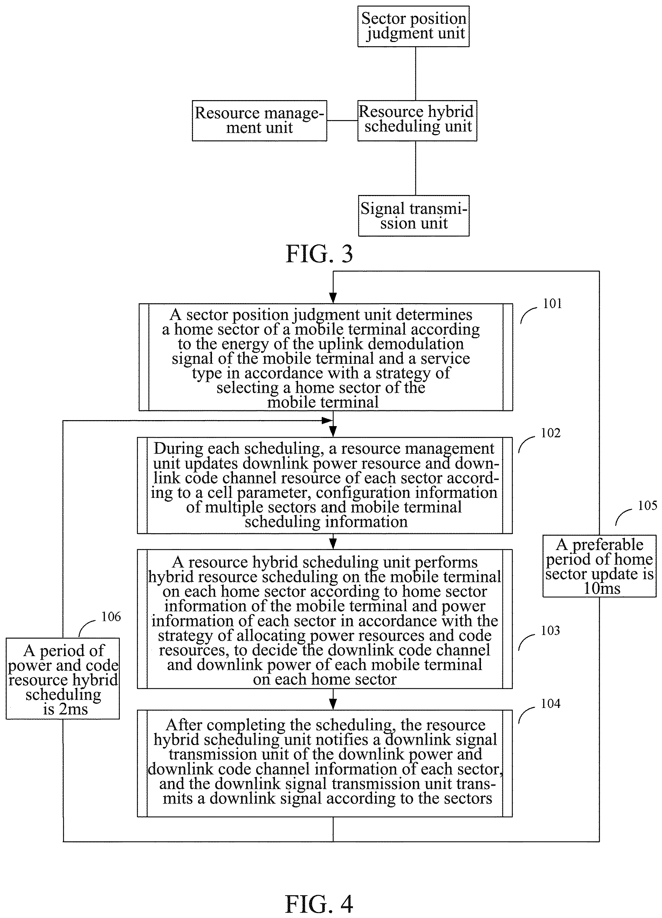

As shown in Fig. 3, an apparatus for scheduling downlink resources according to the present embodiment includes a sector position judgment unit, a resource management unit, a resource hybrid scheduling unit and a signal transmission unit, wherein,
the sector position judgment unit is configured to receive energy of an uplink demodulation signal of a terminal on each sector of a cell, and judge a home sector of the terminal. A different home sector selection threshold Th_E is used for a different service type, and the home sector of the terminal is determined according to the energy of the uplink demodulation signal of each sector of the terminal and the home sector selection threshold in accordance with the strategy of selecting a home section of the terminal;
the resource management unit is configured to allocate independent downlink power resources to each sector and reuse the downlink code channel resources of the cell, and update remaining available resource condition for each sector according to the downlink code channel resource and downlink power resource allocated to the terminal by the resource hybrid scheduling unit;
the resource hybrid scheduling unit is configured to perform hybrid scheduling on the terminal, and decide the downlink code channel and downlink power of the terminal on each home sector in combination with home sector information, service types and sector power information in accordance with the strategy of allocating the power resources and code channel resources; and
the signal transmission unit is configured to perform a downlink signal transmission according to the downlink code channel resource and power resource of the terminal on each sector calculated by the resource hybrid scheduling unit.

Fig. 4 illustrates a flowchart of a downlink multi-antenna hybrid scheduling method according to an embodiment of the present invention, which comprises the following process steps.

In step 101, after a terminal establishes a wireless link with a base station, a sector position judgment unit continuously judges one or more specific home sectors of the terminal according to the energy of the uplink demodulation signal of the terminal;
the sector position judgment unit firstly selects the strongest uplink demodulation signal energy Emax in all sectors and a corresponding strongest home sector SectorMax, and then judges whether a sector is a home sector of the terminal according to energy of uplink demodulation signals of other sectors, and if an uplink demodulation signal of a certain sector meets E(i)> Emax-Th_E, the sector is selected as a home sector of the terminal.

A different home sector selection threshold Th_E is used for a different service type, for example, Th_E is 7dB for a DPA service, and Th_E is 13 dB for a CS12.2k service.

If it is judged that there is one home sector of the terminal, the terminal is located in a single sector; and if there are multiple sectors for the terminal, the terminal is located in a coverage area of multiple sectors.

In step 102, during each scheduling, a resource management unit updates downlink power resource and downlink code resource of each sector according to a cell parameter, configuration information of multiple sectors and terminal scheduling information;
In step 103, a resource hybrid scheduling unit performs hybrid resource scheduling on each scheduled terminal according to home sector information and power information of each sector in accordance with the strategy of allocating power resources and code resources.

For a terminal belonging to a single sector, the downlink power and downlink code resources are allocated on the sector according to the requirements of the terminal.

For a terminal belonging to multiple sectors, hybrid scheduling is performed in multiple sectors to which the terminal belongs, and the downlink power and downlink code channel resource of the terminal on each home sector are decided according to the following strategy:
a) a strategy of allocating downlink code channels:
   using the same downlink code channel on all sectors to which the terminal belongs.
b) a strategy of allocating downlink power:
   if energy E(i) of an uplink demodulation signal of a i^{th} home sector Sector(i) meets E(i) >= Emax - Th_p1, the downlink transmission power of the terminal on the home sector is equal to the downlink power allocated for the strongest home sector SectorMax;
   if energy E(i) of an uplink demodulation signal of a i^{th} home sector Sector(i) meets E(i) < Emax-Th_p1, preferably the downlink transmission power of the terminal on the home sector= the downlink power of the strongest home sector * [Th_E-(Emax- E(i))]/ (Th_E-Th_p1); and
   if power congestion occurs on the i^{th} home sector Sector(i) and the energy E(i) of the uplink demodulation signal thereof meets E(i) < Emax-Th_p2, the downlink power transmission of the terminal on the home sector can be shut down.
c) a different downlink power decrease threshold Th_p1 and a different downlink power shutdown threshold Th_p2 are selected for a different service type. For a DPA service, Th_p1 is 3dB and Th_p2 is 5dB, and for a CS 12.2k service, Th_p1 is 5dB and Th_p2 is 9dB.

In step 104, after completing the scheduling, the resource hybrid scheduling unit notifies a downlink signal transmission unit of the downlink power and downlink code channel information of each sector, and the downlink signal transmission unit transmits downlink signals according to the sectors.

In step 105, the sector position judgment unit periodically updates the home sector information of the terminal;
Preferably, a period of sector position update is 10ms.

In step 106, the resource hybrid scheduling unit periodically schedules the terminal in the OTSR cell, and allocates downlink power resources and downlink code channel resources to the terminal.

Preferably, a period of hybrid scheduling for an HSPA user is 2ms.

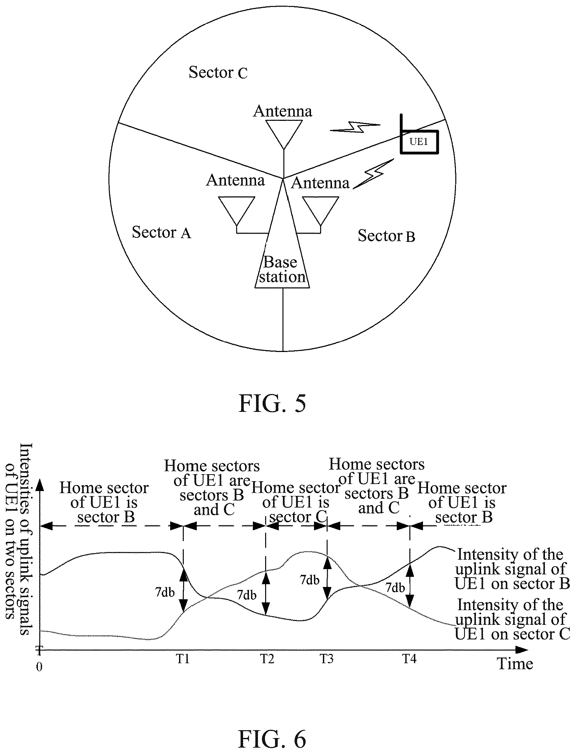

Fig. 5 illustrates a diagram of an application scenario of a terminal determining a home sector according to the present embodiment. In such scenario, one OTSR cell of the terminal is comprised of three sectors, UE1 in the cell is using an HSPA service, the user moves in the cell, and both sectors B and C can receive an uplink demodulation signal of the UE1.

Fig. 6 is a diagram of an embodiment of selecting a home sector of a terminal. Assume that UE1 is an HSPA terminal, and the terminal moves in sectors B and C, wherein, the home sector selection threshold meets Th_E = 7dB.

During a period of time T0∼T1, sectors B and C receive an uplink demodulation signal of the UE1, and the energy of the signal for the sector B is greater than that of the sector C by Th_E, and therefore, the home sector of the UE1 is the sector B.

During a period of time T1∼T2, sectors B and C receive an uplink demodulation signal of the UE1, and a difference between the energy of the signal for the sector B and that for the sector C is less than Th_E, and therefore, the home sectors of the UE1 are the sector B and the sector C.

Similarly, during the period of time T2∼T3, the home sector of the UE1 is the sector C; during the period of time T3∼T4, the home sectors of the UE1 are the sector B and the sector C; and during the period of time T4∼T5, the home sector of the UE1 is the sector B.

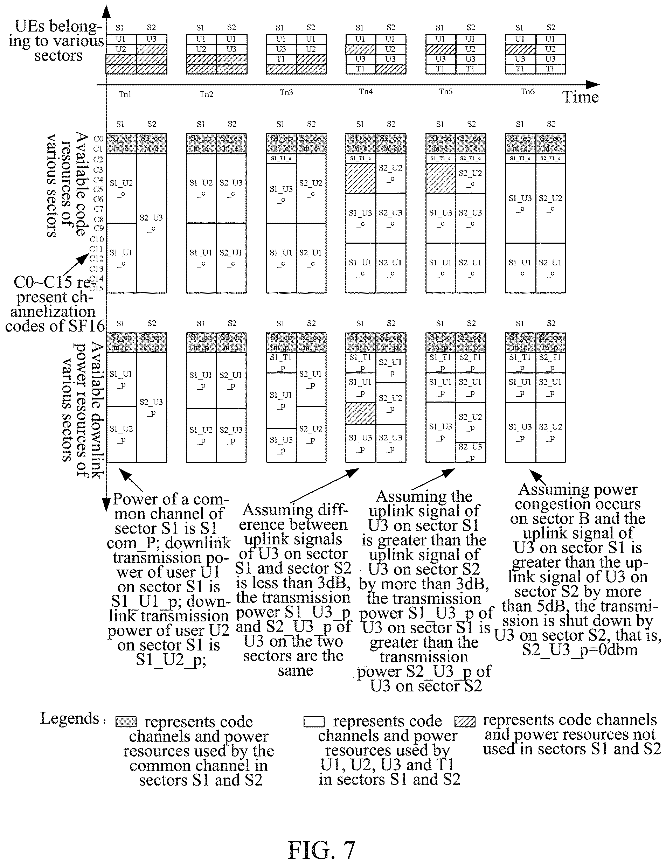

Fig. 7 is a diagram of an embodiment of allocating resources for sectors according to the present invention. In Fig. 7, Sm (m= 1, 2) represents sectors, Un (n=1, 2, 3) represents HSPA users, and T1 represents a R99 user. C0∼C15 represent that the spreading codes in the sector Sm are 16 downlink channel codes, Sm_com_c represents code words occupied by a common channel of the sector Sm, Sm_com_p represents power occupied by a common channel of the sector Sm, Sm_Un_c represents code words occupied by the user Un on the sector Sm, Sm_Un_p represents power occupied by the user Un on the sector Sm, Sm_T1_c represents code words occupied by the user T1 on the sector Sm, and Sm_T1_p represents power occupied by the user T1 on the sector Sm.

After the sector position judgment unit determines home sector information of each terminal in a cell, the resource hybrid scheduling unit allocates downlink code channel and power resource used by the terminal.
At time Tn1:
A home sector of terminals U1 and U2 is the sector C; and a home sector of the terminal U3 is the sector B. On the sector S1 the U1 is allocated to use the downlink code channel S1_U1_c and the downlink power S1_U1_p, and the U2 is allocated to use the downlink code channel S1_U2_c and the downlink power S1_U1_p. On the sector S2, the U3 is allocated to use the downlink code channel S2_U3_c and the downlink power S2_U3_p.
At time Tn2:
Home sectors of the terminal U1 are sectors S1 and S2, a home sector of the terminal U2 is the sector S1, and a home sector of the terminal U3 is the sector S2.

On the sectors S1 and S2, the U1 is allocated to use the same downlink code channels S1_U1_c and S2_U1_c and the downlink power S1_U1_p and S2_U1_p.

On the sector S1, the U2 is allocated to use the downlink code channel S1_U2_c and downlink power S1_U2_p. On the sector S2, the U3 is allocated to use the downlink code channel S2_U3_c and downlink power S2_U3_p.
At time Tn3:
Home sectors of the terminal U1 are sectors S1 and S2, a home sector of the terminal U2 is the sector S2, and a home sector of the terminals U3 and T1 is the sector S1. On the sector S1, the T1 is allocated to use the RNC configured code word S1_T1_c and use the downlink power S1_T1_p, and the U3 is allocated to use the downlink code channel S1_U3_c and the downlink power S1_U3_p.

On the sector S2, the U2 is allocated to use the downlink code channel S2_U2_c and downlink power S2_U2_p. On the sectors S1 and S2, the U1 is allocated to use the same downlink codes S1_U1_c and S2_U1_c and downlink power S1_U1_p and S2_U1_p.
At time Tn4:
A home sector of the terminal T1 is the sector S1; a home sector of the terminal U2 is the sector S2; and home sectors of the terminal U1 and U3 are sectors S1 and S2. On the sector S1, the T1 is allocated to use the RNC configured code word S1_T1_c and downlink power S1_T1_p.

On the sector S2, the U2 is allocated to use the downlink code channel S2_U2_c and the downlink power S2_U2_p. On the sectors S1 and S2, the U1 is allocated to use the same downlink code channels S1_U1_c and S2_U1_c, and use relatively small power S1_U1_p and S2_U1_p due to less data; and the U3 is allocated to use the same downlink code channels S1_U3_c and S2_U3_c, and since there is less remaining available power for the sector S2 and sufficient power for the sector C and a difference between uplink demodulation signals of the U3 on the home sectors S1 and S2 is less than Th_p1, preferably the U3 use the same power S1_U3_p and S2_U3_p on the two sectors.
At time Tn5:
Home sectors of the terminal U1 and U3 are sectors S1 and S2; and a home sector of the terminal U2 is the sector S2. On the sectors S1 and S2, the T1 is allocated to use code words S1_T1_c and S2_T1_c, and use required power S1_T1_p and S2_T1_p; and the U1 is allocated to use the same downlink code channels S1_U1_c and S2_U1_c and use relatively small power S1_U1_p and S2_U1_p due to less data.

On the sector S2, the U2 is allocated to use the downlink code channel S2_U2_c and downlink power S2_U2_p. On the sectors S1 and S2, the U3 is allocated to use the same downlink code channels S1_U3_c and S2_U3_c, and the transmission power S2_U3_p of the U3 on the sector S2 is less than the transmission power S1_U3_p of the U3 on the sector S1 since there is less remaining available power for the sector S2 and sufficient power for the sector S1 and meanwhile the uplink demodulation signal of the U3 on the home sector S2 is less than the uplink demodulation signal of the U3 on the sector S1 and the difference exceeds Th_p1.
At time Tn6:
Home sectors of the terminal U1 U3 and T1 are sectors S1 and S2, and a home sector of the terminal U2 is the sector S2. On the sectors S1 and S2, the T1 is allocated to use code words S1_T1_c and S2_T1_c and use required power S1_T1_p and S2_T1_p; and the U1 is allocated to use the same downlink code channels S1_U1_c and S2_U1_c and use relatively small power S1_U1_p and S2_U1_p due to less data.

On the sector S2, the U2 is allocated to use the downlink code channel S2_U2_c and downlink power S2_U2_p. As power congestion occurs on the sector S2 and the uplink demodulation signal of the U3 on the home sector S2 is less than the uplink demodulation signal of the U3 on the sector S1 and the difference exceeds Th_p2, the downlink power transmission of the U3 is shut down by the system on the sector S2. On the sector S1, the U3 is allocated to use the downlink code channel S1_U3_c and use the downlink power S1_U3_p.

Obviously, those skilled in the art should understand that each module or each step of the aforementioned present invention can be implemented with general computing devices, and can be integrated in a single computing device, or distributed onto a network consisting of a plurality of computing devices; alternatively, they can be implemented with program codes executable by the computing devices, and therefore, they can be stored in storage devices to be executed by the computing devices; alternatively, they are respectively made into various integrated circuit modules; alternatively, it is implemented with making several modules or steps of them into a single integrated circuit module. Thus, the present invention is not limited to any specific combinations of hardware and software.

The above description is only the preferred embodiments of the present invention and is not intended to limit the present invention. For those skilled in the art, the present invention can have various changes and variations.

### Industrial Applicability

The embodiments of the present invention achieve an optimized strategy of determining a home sector of a mobile terminal and hybrid scheduling of power and code resources of multiple sectors, which improves utilization of the power resources and code resources, and effectively control interference of downlink co-spreading codes, so that the sub-sector transmission technology of the OTSR really has a commercial capability.

## Claims

1. A method for scheduling downlink resources, comprising:
a base station determining a home sector of a terminal according to energy of an uplink demodulation signal of the terminal received in each sector, and allocating downlink power and a downlink code channel to the terminal in the home sector according to the home sector of the terminal, wherein the step of a base station determining a home sector of a terminal according to energy of an uplink demodulation signal of the terminal received in each sector comprises:
the base station selecting a sector corresponding to received strongest uplink demodulation signal energy Emax of the terminal as a strongest home sector of the terminal, and judging whether energy E(i) of the uplink demodulation signal of a sector i other than the strongest home sector in sectors corresponding to the terminal meets E(i) > Emax - Th_E, and if yes, determining the sector i as a home sector of the terminal other than the strongest home sector, wherein, Th_E is a home sector selection energy threshold, and i is a sector number;
the base station allocating downlink power to the terminal in the strongest home sector, and judging whether energy E(i) of the uplink demodulation signal of the terminal received in a home sector of the terminal other than the strongest home sector meets E(i) >= Emax - Th_p1, and if yes, determining to use in the home sector the same downlink power as that in the strongest home sector; and if not, determining that the downlink power in the home sector is less than the downlink power in the strongest home sector, wherein, Th_p1 is a downlink power decrease threshold,
when the base station allocates the downlink power to the terminal in each home sector of the terminal, when determining that a power congestion occurs in a home sector, judging whether energy E(i) of the uplink demodulation signal of the terminal received in the sector where the power congestion occurs meets E(i) < Emax - Th_p2, and if yes, shutting down transmission to the terminal in the home sector, wherein, Th_p2 is a downlink power shutdown threshold.

2. The method according to claim 1, wherein, the step of allocating downlink power and a downlink code channel to the terminal in the home sector according to the home sector of the terminal comprises:
when the terminal corresponds to one home sector, the base station allocating required downlink power and downlink code channel to the terminal in the home sector of the terminal.

3. The method according to claim 1, wherein, the step of allocating downlink power and a downlink code channel to the terminal in the home sector according to the home sector of the terminal comprises:
when the terminal corresponds to multiple home sectors, the base station allocating the same downlink code channel to the terminal in the multiple home sectors corresponding to the terminal, and allocating downlink power to the terminal in each home sector of the terminal respectively.

4. The method according to claim 1, wherein, when the energy E(i) of the uplink demodulation signal of the terminal received in the home sector of the terminal other than the strongest home sector does not meet E(i) >= Emax - Th_p1, the base station determines that the downlink power of the terminal in the home sector=the downlink power in the strongest home sector * [Th_E-(Emax- E(i))]/ (Th_E-Th_p1).

5. The method according to claim 1, wherein,
different service types of the terminal correspond to different Th_E, Th_p1 and Th_p2; and
the base station determines the home sector of the terminal according to the service type of the terminal, and allocates downlink power and a downlink code channel to the terminal in the home sector according to the service type of the terminal.

6. An apparatus for scheduling downlink resources, comprising a sector position judgment unit, a resource management unit and a resource hybrid scheduling unit, wherein,
the sector position judgment unit is configured to select a sector corresponding to received strongest uplink demodulation signal energy Emax of a terminal as a strongest home sector of the terminal, and judge whether energy E(i) of uplink demodulation signal of a sector i other than the strongest home sector in sectors corresponding to the terminal meets E(i) > Emax - Th_E, and if yes, determine the sector i as a home sector of the terminal other than the strongest home sector, wherein Th_E is a home sector selection energy threshold, and i is a sector number;
the resource management unit is configured to update downlink power resource and downlink code channel resource of each sector according to a cell parameter, configuration information of multiple sectors and terminal scheduling information; and
the resource hybrid scheduling unit is configured to allocate downlink power and a downlink code channel to the terminal in the home sector according to the home sector of the terminal; to allocate downlink power to the terminal in the strongest home sector, and to judge whether energy E(i) of uplink demodulation signal of the terminal received in a home sector of the terminal other than the strongest home sector meets E(i) >= Emax - Th_p1, and if yes, to determine to use in the home sector the same downlink power as that in the strongest home sector; and if not, to determine that the downlink power in the home sector is less than the downlink power in the strongest home sector, wherein Th_p1 is a downlink power decrease threshold; and, when allocating the downlink power to the terminal in each home sector of the terminal, and when determining that a power congestion occurs in a home sector, to judge whether energy E(i) of the uplink demodulation signal of the terminal received in the sector where the power congestion occurs meets E(i) < Emax - Th_p2, and if yes, to shut down transmission to the terminal in the home sector, wherein Th_p2 is a downlink power shutdown threshold.

7. The apparatus according to claim 6, wherein,
the resource hybrid scheduling unit is configured to allocate required downlink power and downlink code channel to the terminal in the home sector of the terminal when the terminal corresponds to one home sector.

8. The apparatus according to claim 6, wherein,
the resource hybrid scheduling unit is configured to, when the terminal corresponds to multiple home sectors, allocate the same downlink code channel to the terminal in the multiple home sectors corresponding to the terminal, and allocate downlink power to the terminal in each home sector of the terminal respectively.

9. The apparatus according to claim 6, wherein,
the resource hybrid scheduling unit is configured to, when the energy E(i) of the uplink demodulation signal of the terminal received in the home sector of the terminal other than the strongest home sector does not meet E(i) >= Emax - Th_p1, determine that the downlink power of the terminal in the home sector=the downlink power in the strongest home sector * [Th_E-(Emax- E(i))]/ (Th_E-Th_p1).

## Patentansprüche

1. Verfahren zur Zeitplanung von Downlink-Ressourcen, wobei das Verfahren umfasst:
Bestimmen, durch eine Basisstation, eines Heimsektors eines Endgeräts gemäß der Energie eines Uplink-Demodulationssignals des Endgeräts, das in jedem Sektor empfangen worden ist, und Zuweisen von Downlink-Leistung sowie einem Downlink-Codekanal an das Endgerät in dem Heimsektor gemäß dem Heimsektor des Endgeräts, wobei der Schritt, bei dem eine Basisstation einen Heimsektor eines Endgeräts bestimmt gemäß der Energie eines Uplink-Demodulationssignals des Endgeräts, das in jedem Sektor empfangen worden ist, umfasst:
Auswählen, durch die Basisstation, eines Sektors, der mit der stärksten empfangenen Uplink-Demodulationssignalenergie Emax des Endgeräts übereinstimmt, als einen stärksten Heimsektor des Endgeräts, und Beurteilen, ob die Energie E(i) des Uplink-Demodulationssignals eines Sektors i, der nicht der stärkste Heimsektor in mit dem Endgerät übereinstimmenden Heimsektoren ist, die Formel E(i) > Emax - Th_E erfüllt, und falls ja, dann Bestimmen des Sektors i, der nicht der stärkste Heimsektor ist, als Heimsektor des Endgeräts, wobei es sich bei Th_E um einen Energiegrenzwert zur Auswahl eines Heimsektors handelt, und bei i um eine Sektornummer;
Zuweisen, durch die Basisstation, von Downlink-Leistung an das Endgerät in dem stärksten Heimsektor, und Beurteilen, ob die Energie E(i) des Uplink-Demodulationssignals des Endgeräts, das in einem Heimsektor des Endgeräts empfangen wurde, der nicht der stärkste Heimsektor ist, die Formel E(i) ≥ Emax - Th_p1 erfüllt, und falls ja, Bestimmen, in dem Heimsektor die gleiche Downlink-Leistung wie in dem stärksten Heimsektor zu verwenden; und falls nicht, Bestimmen, dass die Downlink-Leistung in dem Heimsektor geringer ist als die Downlink-Leistung in dem stärksten Heimsektor, wobei es sich bei Th_p1 um einen Grenzwert zur Downlink-Leistungsabnahme handelt,
wobei, wenn die Basisstation dem Endgerät in jedem Heimsektor des Endgeräts die Downlink-Leistung zuweist, wenn bestimmt wird, dass eine Leistungsüberlastung in dem Heimsektor aufgetreten ist, die Basisstation beurteilt, ob die Energie E(i) des Uplink-Demodulationssignals des Endgeräts, das in dem Sektor, in dem die Leistungsüberlastung aufgetreten ist, die Formel E(i) < Emax - Th_p2 erfüllt, und falls ja, die Übertragung an das Endgerät in dem Heimsektor beendet, wobei es sich bei Th_p2 um einen Grenzwert zur Downlink-Leistungsbeendigung handelt.

2. Verfahren gemäß Anspruch 1, wobei der Schritt, bei welchem dem Endgerät in dem Heimsektor eine Downlink-Leistung sowie ein Downlink-Codekanal gemäß dem Heimsektor des Endgeräts zugewiesen werden, umfasst:
wenn das Endgerät mit einem Heimsektor übereinstimmt, Zuweisen, durch die Basisstation, der erforderlichen Downlink-Leistung und des Downlink-Codekanals an das Endgerät in dem Heimsektor des Endgeräts.

3. Verfahren gemäß Anspruch 1, wobei der Schritt, bei welchem dem Endgerät in dem Heimsektor eine Downlink-Leistung sowie ein Downlink-Codekanal gemäß dem Heimsektor des Endgeräts zugewiesen werden, umfasst:
wenn das Endgerät mit mehreren Heimsektoren übereinstimmt, Zuweisen, durch die Basisstation" des gleichen Downlink-Codekanals an das Endgerät in den mehreren Heimsektoren, die mit dem Endgerät übereinstimmen und jeweils Zuweisen von Downlink-Leistung an das Endgerät in jedem Heimsektor des Endgeräts.

4. Verfahren gemäß Anspruch 1, wobei, wenn die Energie E(i) des Uplink-Demodulationssignals des Endgeräts, das in einem Heimsektor des Endgeräts empfangen wurde, der nicht der stärkste Heimsektor ist, die Formel E(i) ≥ Emax - Th_p1 nicht erfüllt, dann bestimmt die Basisstation, dass die Downlink-Leistung des Endgeräts in dem Heimsektor gleich der Downlink-Leistung in dem stärksten Heimsektor ist * [Th_E - (Emax - E(i))]/(Th_E - Th_p1).

5. Verfahren gemäß Anspruch 1, wobei,
verschiedene Dienstarten des Endgeräts mit verschiedenen Th_E, Th_p1 und Th_p2 übereinstimmen; und
die Basisstation den Heimsektor des Endgeräts gemäß der Dienstart des Endgeräts bestimmt und dem Endgerät in dem Heimsektor eine Downlink-Leistung sowie einen Downlink-Codekanal gemäß der Dienstart des Endgeräts zuweist.

6. Vorrichtung zur Zeitplanung von Downlink-Ressourcen, wobei die Vorrichtung umfasst: eine Einheit zur Beurteilung einer Sektorposition, eine Einheit zum Management von Ressourcen und eine Einheit zur Hybridzeitplanung der Ressourcen, wobei
die Einheit zur Beurteilung der Sektorposition dazu konfiguriert ist, einen Sektor, der mit der stärksten empfangenen Uplink-Demodulationssignalenergie Emax des Endgeräts übereinstimmt, als stärksten Heimsektor des Endgeräts auszuwählen, und zu beurteilen, ob die Energie E(i) des Uplink-Demodulationssignals eines Sektors i, der nicht der stärkste Heimsektor in mit dem Endgerät übereinstimmenden Heimsektoren ist, die Formel E(i) > Emax - Th_E erfüllt, und falls ja, dann den Sektor i, der nicht der stärkste Heimsektor ist, als Heimsektor des Endgeräts bestimmt, wobei es sich bei Th_E um einen Energiegrenzwert zur Auswahl eines Heimsektors handelt, und bei i um eine Sektornummer;
die Einheit zum Management von Ressourcen dazu konfiguriert ist, Downlink-Leistungsressourcen und Downlink-Codekanalressourcen jedes Sektors gemäß einem Zellenparameter zu aktualisieren, sowie Konfigurationsinformationen von mehreren Sektoren und Endgeräte-Zeitplanungsinformationen zu aktualisieren; und
die Einheit zur Hybridzeitplanung der Ressourcen dazu konfiguriert ist, dem Endgerät in dem Heimsektor eine Downlink-Leistung sowie einen Downlink-Codekanal gemäß dem Heimsektor des Endgeräts zuzuweisen, dem Endgerät in dem stärksten Heimsektor eine Downlink-Leistung zuzuweisen, und zu beurteilen, ob die Energie E(i) des Uplink-Demodulationssignals des Endgeräts, das in einem Heimsektor des Endgeräts empfangen wurde, der nicht der stärkste Heimsektor ist, die Formel E(i)≥ Emax - Th_p1 erfüllt, und falls ja, zu bestimmen, in dem Heimsektor die gleiche Downlink-Leistung wie in dem stärksten Heimsektor zu verwenden; und falls nicht, zu bestimmen, dass die Downlink-Leistung in dem Heimsektor geringer ist als die Downlink-Leistung in dem stärksten Heimsektor, wobei es sich bei Th_p1 um einen Grenzwert zur Downlink-Leistungsabnahme handelt; und, wenn dem Endgerät in jedem Heimsektor des Endgeräts Downlink-Leistung zugewiesen wird, und wenn bestimmt wird, dass eine Leistungsüberlastung in einem Heimsektor aufgetreten ist, zu beurteilen, ob die Energie E(i) des Uplink-Demodulationssignals des Endgeräts, das in dem Sektor, in dem die Leistungsüberlastung aufgetreten ist, die Formel E(i) < Emax - Th_p2 erfüllt, und falls ja, die Übertragung an das Endgerät in dem Heimsektor zu beenden, wobei es sich bei Th_p2 um einen Grenzwert zur Downlink-Leistungsbeendigung handelt.

7. Vorrichtung gemäß Anspruch 6, wobei:
die Einheit zur Hybridzeitplanung der Ressourcen dazu konfiguriert ist, dem Endgerät in dem Heimsektor des Endgeräts die erforderliche Downlink-Leistung und den Downlink-Codekanal zuzuweisen, wenn das Endgerät mit einem Heimsektor übereinstimmt.

8. Vorrichtung gemäß Anspruch 6, wobei:
die Einheit zur Hybridzeitplanung der Ressourcen dazu konfiguriert ist, wenn das Endgerät mit mehreren Heimsektoren übereinstimmt, dem Endgerät in den mehreren Heimsektoren, die mit dem Endgerät übereinstimmen, den gleichen Downlink-Codekanal zuzuweisen, und dem Endgerät in jedem Heimsektor des Endgeräts jeweils Downlink-Leistung zuzuweisen.

9. Vorrichtung gemäß Anspruch 6, wobei:
die Einheit zur Hybridzeitplanung der Ressourcen dazu konfiguriert ist, wenn die Energie E(i) des Uplink-Demodulationssignals des Endgeräts, das in einem Heimsektor des Endgeräts empfangen wurde, der nicht der stärkste Heimsektor ist, die Formel E(i) ≥ Emax - Th_p1 nicht erfüllt, zu bestimmen, dass die Downlink-Leistung des Endgeräts in dem Heimsektor gleich der Downlink-Leistung in dem stärksten Heimsektor ist * [Th_E - (Emax - E(i))]/(Th_E - Th_p1).

## Revendications

1. Procédé de planification de ressources de liaison descendante, comprenant :
la détermination, par une station de base, d'un secteur domestique d'un terminal conformément à l'énergie d'un signal de démodulation de liaison montante du terminal reçu dans chaque secteur, et l'attribution d'une puissance de liaison descendante et d'un canal de code de liaison descendante au terminal du secteur domestique conformément au secteur domestique du terminal, ladite étape de détermination, par la station de base, d'un secteur domestique d'un terminal conformément à l'énergie d'un signal de démodulation de liaison montante du terminal reçu dans chaque secteur comprenant :
le choix, par la station de base, d'un secteur correspondant à l'énergie de signal de démodulation de liaison montante la plus forte reçue Emax du terminal comme secteur domestique du terminal le plus puissant, et l'évaluation du fait que l'énergie E(i) du signal de démodulation de liaison montante d'un secteur i autre que le secteur domestique le plus puissant dans des secteurs correspondant au terminal répond à la formule E(i) > Emax - Th_E, ou non, et si elle y répond, la détermination du secteur i comme secteur domestique du terminal autre que le secteur domestique le plus puissant, en sachant que Th_E représente un seuil énergétique de choix de secteur domestique, et i représente un numéro de secteur ;
l'attribution, par la station de base, d'une puissance de liaison descendante au terminal du secteur domestique le plus puissant, et l'évaluation du fait que l'énergie E(i) du signal de démodulation de liaison montante du terminal reçu dans un secteur domestique du terminal autre que le secteur domestique le plus puissant répond à la formule E(i) ≥ Emax - Th_p1, ou non, et si elle y répond, la détermination d'utiliser, dans le secteur domestique, la même puissance de liaison descendante que celle du secteur domestique le plus puissant, et, si elle n'y répond pas, la détermination du fait que la puissance de liaison descendante du secteur domestique est inférieure à la puissance de liaison descendante du secteur domestique le plus puissant, en sachant que Th_p1 représente un seuil de réduction de puissance de liaison descendante,
lorsque la station de base attribue la puissance de liaison descendante au terminal dans chaque secteur domestique du terminal, lors de la détermination du fait qu'il s'est produit un encombrement de puissance dans un secteur domestique, l'évaluation du fait que l'énergie E(i) du signal de démodulation de liaison montante du terminal reçu dans le secteur où s'est produit l'encombrement de puissance répond à la formule E(i) < Emax - Th_p2, ou non, et si elle y répond, l'interruption de la transmission auprès du terminal du secteur domestique, en sachant que Th_p2 représente un seuil d'interruption de puissance de liaison descendante.

2. Procédé selon la revendication 1, dans lequel l'étape d'attribution d'une puissance de liaison descendante et d'un canal de code de liaison descendante au terminal du secteur domestique conformément au secteur domestique du terminal comprend :
lorsque le terminal correspond à un seul secteur domestique, l'attribution, par la station de base, d'une puissance de liaison descendante requise et du canal de code de liaison descendante requis au terminal dans le secteur domestique du terminal.

3. Procédé selon la revendication 1, dans lequel l'étape d'attribution d'une puissance de liaison descendante et d'un canal de code de liaison descendante au terminal du secteur domestique conformément au secteur domestique du terminal comprend :
lorsque le terminal correspond à de multiples secteurs domestiques, l'attribution, par la station de base, du même canal de code de liaison descendante au terminal dans les multiples secteurs domestiques correspondant au terminal, et l'attribution d'une puissance de liaison descendante au terminal dans chaque secteur domestique du terminal, respectivement.

4. Procédé selon la revendication 1, dans lequel, lorsque l'énergie E(i) du signal de démodulation de liaison montante du terminal reçu dans le secteur domestique du terminal autre que le secteur domestique le plus puissant ne répond pas à la formule E(i) ≥ Emax - Th_p1, la station de base détermine que la puissance de liaison descendante du terminal du secteur domestique est égale à la puissance de liaison descendante du secteur domestique le plus puissant * [Th_E - (Emax - E(i))]/(Th_E - Th_p1).

5. Procédé selon la revendication 1, dans lequel
les différents types de service du terminal correspondent à différents Th_E, Th_p1 et Th_p2 ; et
la station de base détermine le secteur domestique du terminal conformément au type de service du terminal, et attribue une puissance de liaison descendante et un canal de code de liaison descendante au terminal du secteur domestique conformément au type de service du terminal.

6. Appareil de planification de ressources de liaison descendante, comprenant une unité d'évaluation de position de secteur, une unité de gestion de ressources et une unité de planification hybride de ressources, dans lequel
l'unité d'évaluation de position de secteur est configurée pour choisir un secteur correspondant à l'énergie de signal de démodulation de liaison montante la plus forte reçue Emax d'un terminal comme secteur domestique du terminal le plus puissant, et pour évaluer si l'énergie E(i) du signal de démodulation de liaison montante d'un secteur i autre que le secteur domestique le plus puissant dans des secteurs correspondant au terminal répond à la formule E(i) > Emax - Th_E, ou non, et si elle y répond, pour déterminer le secteur i comme secteur domestique du terminal autre que le secteur domestique le plus puissant, en sachant que Th_E représente un seuil énergétique de choix de secteur domestique, et i représente un numéro de secteur ;
l'unité de gestion de ressources est configurée pour mettre à jour la ressource de puissance de liaison descendante et la ressource de canal de code de liaison descendante de chaque secteur conformément à un paramètre de cellule, des informations de configuration de multiples secteurs et des informations de planification de terminal ; et
l'unité de planification hybride de ressources est configurée pour attribuer une puissance de liaison descendante et un canal de code de liaison descendante au terminal du secteur domestique conformément au secteur domestique du terminal ; pour attribuer une puissance de liaison descendante au terminal du secteur domestique le plus puissant, et pour évaluer si l'énergie E(i) du signal de démodulation de liaison montante du terminal reçu dans un secteur domestique du terminal autre que le secteur domestique le plus puissant répond à la formule E(i) ≥ Emax - Th_p1, ou non, et si elle y répond, pour déterminer d'utiliser, dans le secteur domestique, la même puissance de liaison descendante que celle du secteur domestique le plus puissant, et, si elle n'y répond pas, pour déterminer que la puissance de liaison descendante du secteur domestique est inférieure à la puissance de liaison descendante du secteur domestique le plus puissant, en sachant que Th_p1 représente un seuil de réduction de puissance de liaison descendante ; et, lors de l'attribution de la puissance de liaison descendante au terminal dans chaque secteur domestique du terminal, et lors de la détermination du fait qu'il s'est produit un encombrement de puissance dans un secteur domestique, pour évaluer si l'énergie E(i) du signal de démodulation de liaison montante du terminal reçu dans le secteur où s'est produit l'encombrement de puissance répond à la formule E(i) < Emax - Th_p2, ou non, et si elle y répond, pour interrompre la transmission auprès du terminal du secteur domestique, en sachant que Th_p2 représente un seuil d'interruption de puissance de liaison descendante.

7. Appareil selon la revendication 6, dans lequel
l'unité de planification hybride de ressources est configurée pour attribuer une puissance de liaison descendante requise et un canal de code de liaison descendante requis au terminal dans le secteur domestique du terminal lorsque le terminal correspond à un seul secteur domestique.

8. Appareil selon la revendication 6, dans lequel
l'unité de planification hybride de ressources est configurée, lorsque le terminal correspond à de multiples secteurs domestiques, pour attribuer le même canal de code de liaison descendante au terminal dans les multiples secteurs domestiques correspondant au terminal, et pour attribuer une puissance de liaison descendante au terminal dans chaque secteur domestique du terminal, respectivement.

9. Appareil selon la revendication 6, dans lequel
l'unité de planification hybride de ressources est configurée, lorsque l'énergie E(i) du signal de démodulation de liaison montante du terminal reçu dans le secteur domestique du terminal autre que le secteur domestique le plus puissant ne répond pas à la formule E(i) ≥ Emax - Th_p1, pour déterminer que la puissance de liaison descendante du terminal du secteur domestique est égale à la puissance de liaison descendante du secteur domestique le plus puissant * [Th_E - (Emax - E(i))]/(Th_E - Th_p1).
